# EUROPÄISCHE PATENTSCHRIFT

(11) **EP 3 494 044 B1**
(45) Veröffentlichungstag und Bekanntmachung des Hinweises auf die Patenterteilung: **30.11.2022**
(21) Anmeldenummer: 17784845.4
(22) Anmeldetag: 17.10.2017
(51) Int. Cl.: B64D 11/06, B60N 2/00, B64D 11/00

(54) **ÜBERWACHUNGSMODUL FÜR EINEN SITZPLATZ EINES PASSAGIERFLUGZEUGES, ÜBERWACHUNGSEINRICHTUNG UND PASSAGIERFLUGZEUG**
MONITORING MODULE FOR A SEAT OF A PASSENGER AIRCRAFT, MONITORING DEVICE AND PASSENGER AIRCRAFT
MODULE DE SURVEILLANCE POUR UN SIÈGE D'UN AÉRONEF DE TRANSPORT DE PASSAGERS, DISPOSITIF DE SURVEILLANCE ET AÉRONEF DE TRANSPORT DE PASSAGERS

(30) Priorität: 29.10.2016 DE 102016012912
(43) Veröffentlichungstag der Anmeldung: 12.06.2019
(73) Patentinhaber: Diehl Aerospace GmbH, 88662 Überlingen (DE)
(72) Erfinder: SCHEVARDO, Dirk-Achim, 90552 Röthenbach (Haimendorf) (DE); TRUNK, Lothar, 63879 Weibersbrunn (DE); RAGER, Ehler, 88662 Überlingen (DE); MÜLLER-DIVEKY, Stefan, 61137 Schöneck (DE)
(74) Vertreter: Diehl Patentabteilung
(86) Internationale Anmeldenummer: PCT/EP2017/001222
(87) Internationale Veröffentlichungsnummer: WO 2018/077467

(56) Entgegenhaltungen:
- EP-A1- 2 730 479
- WO-A2-2009/062614
- DE-A1-102004 025 319
- DE-A1-102006 030 193
- DE-A1-102006 042 299
- DE-A1-102014 204 926
- DE-B4-102006 042 299
- DE-U1- 29 613 291
- DE-U1- 29 613 291
- N. N.: "NFC - Near Field Communication", Elektronik Kompendium, 2 October 2020 (2020-10-02), XP055736184, Retrieved from the Internet: URL:https://www.elektronik-kompendium.de/s ites/kom/1107181.htm [retrieved on 2020-10-02]

## Beschreibung

Die Erfindung betrifft ein Überwachungsmodul für einen Sitzplatz eines Passagierflugzeuges, eine Überwachungseinrichtung für ein Passagierflugzeug und ein Passagierflugzeug.

Passagierflugzeuge weisen eine Vielzahl von Sitzplätzen zur Beförderung von Passagieren auf. Jeder Sitzplatz verfügt hierbei über ein oder mehrere Elemente, die verschiedene Zustände einnehmen können. Ein Element ist beispielsweise ein Sicherheitsgurt, der die Zustände offen (Passagier nicht angeschnallt) oder geschlossen (Passagier angeschnallt) einnehmen kann. Ein anderes Element ist eine Rückenlehne, die die Zustände "aufrecht gestellt" oder "nach hinten geneigt" einnehmen kann.

Im Flugbetrieb müssen verschiedene Elemente verschiedene Zustände einnehmen, beispielsweise sind bei Start und Landung des Flugzeugs die Sicherheitsgurte zu schließen und die Rückenlehnen aufrecht zu stellen. Derzeit muss ein derartiger Status bzw. Zustand von Flugzeugsitzen bzw. Sitzplätzen, insbesondere ob der Passagier angeschnallt ist, visuell von der Kabinenbesatzung überprüft werden. Dies ist sehr fehlerträchtig und führt zu vielen Verletzungen im täglichen Betrieb.

Aus der DE 10 2006 042 299 B4 ist ein Überwachungsverfahren zum Überwachen eines Sitzzustands für ein Flugzeug bekannt. Ein Sitzbelegungszustand eines Sitzelementes wird mittels eines Sitzbelegungssensors und ein Anschnallzustand des Sitzelementes wird mittels eines Anschnallsensors gemessen. Der Sitzbelegungszustand und der Anschnallzustand werden an eine Überwachungseinrichtung übermittelt. Die Überwachungseinrichtung erzeugt bei einer Kombination eines vorbestimmten Sitzbelegungszustands und eines vorbestimmten Anschnallzustands ein Warnsignal.

Aus der WO 2009/062614 A2 ist eine Sitzanordnung für ein Luftfahrzeug mit mehreren Sensormodulen bekannt, um zumindest den Zustand und/oder die Belegung der Sitzanordnung zu sensieren und diese Informationen an eine zentral im Luftfahrzeug angeordnete Prozessoreinheit zu liefern. Eine der Sitzanordnung zugeordnete Sende-Empfangseinheit ist vorgesehen, wobei die Sensormodule kabellos ausgeführt sind und energetisch autark Informationen an die Sende-Empfangseinheit über eine Sensorfunkstrecke liefern, um diese durch die Sende-Empfangseinheit an die Prozessoreinheit zu übermitteln.

Aus der DE 10 2014 204 926 A1 ist ein Verfahren zur Übermittlung von Informationen von einem Passagiersitz an ein Kabinensystem eines Passagierflugzeugs bekannt, wobei der Passagiersitz eine Funkeinheit und eine Energy-Harvesting-Einrichtung zur elektrischen Versorgung der Funkeinheit aufweist, wobei die Funkeinheit infolge des Empfangs eines Signals von einem Sensor zur Erfassung einer Sitzzustandsgröße und/oder von einem passagierbetätigten Schalter zum Ein-/Ausschalten einer Leseleuchte oder zum Rufen von Kabinenpersonal ein entsprechendes Steuersignal an das Kabinensystem per Funk überträgt.

Aus der DE 10 2004 025 319 A1 ist ein Sitzstatus-Anzeigesystem für Passagierräume von Flugzeugen und Fahrzeugen bekannt, das eine Vielzahl von Sensoranordnungen umfasst, von denen jede zur Erfassung des Zustands eines Sitzes dient und entsprechende Sitzstatus-Signale erzeugt. Die Sensoranordnungen umfassen jeweils einen Sitzbelegungs-Sensor zur Erfassung der Belegung eines Sitzes und einen Gurt-Sensor zur Erfassung eines Schließzustands eines Sicherheitsgurts des Sitzes. Weiterhin ist eine Bedien- und Anzeigeeinheit vorgesehen, die elektrisch über einen Bus und den Sensoranordnungen verbunden ist, um von jeder Sensoranordnung die zugehörigen Sitzstatus-Signale zu empfangen und für jeden Sitz grafisch anzuzeigen. Weiterhin wird ein entsprechender Sitz für Passagiere von Flugzeugen und Fahrzeugen und eine zugehörige Bedien- und Anzeigeeinheit für Sitze in Flugzeugen und Fahrzeugen beschrieben.

Aus der DE 10 2006 030 193 A1 ist ein System zum Bestimmen eines Sitzzustands für einen Flugzeugsitz bekannt. Das System weist einen Flugzeugsitz mit einer Sitzüberwachungseinrichtung auf. Die Sitzüberwachungseinrichtung ist dabei ausgebildet, Informationen eines Sitzzustands des Flugzeugsitzes bereitzustellen.

Aus der EP 2 730 479 A1 ist ein Sitz für ein Passagierfahrzeug bekannt, wobei der Sitz umfasst: einen ersten Sensor zum Erfassen der Anwesenheit oder Abwesenheit eines Passagiers auf dem Sitz; und einen zweiten Sensor zum Validieren der Sitzbelegung, wobei der Sitz ferner einen Sender zum Senden eines Signals umfasst, das die gültige Belegung des Sitzes anzeigt. Der erste Sensor kann ein berührungsloser kapazitiver Sensor sein, und der zweite Sensor kann eine Nahfeldkommunikationsvorrichtung zum Empfangen eines Sitzvalidierungscodes umfassen. Ein Sitzvalidierungssystem kann in einem Passagierfahrzeug wie einem Zug eingerichtet sein, wobei eine zentrale Steuerung über den Sitzbelegungsstatus für das Fahrzeug berichten kann.

Aus der DE 296 13 291 U1 ist eine Sicherheitseinrichtung für die Sitze eines PassagierFlugzeuges bekannt, wobei jeder Sitz eine in ihrer Neigung verstellbare Rückenlehne und einen Sicherheitsgurt mit einem Gurtschloß aufweist, wobei das Gurtschloß einen Gurtschloß-Sensor zur Feststellung der Verschluß- bzw. der Nichtverschlußstellung und/oder die Rückenlehne einen Rückenlehnen-Sensor zur Feststellung der aufrechten Sitzposition bzw. einer von der aufrechten Sitzposition abweichenden, nach hinten geschwenkten Ruhe- bzw. Liegeposition aufweist, und wobei der Gurtschloß-Sensor und/oder der Rückenlehnen-Sensor des jeweiligen Sitzes mit einem vom Flugzeug-Begleitpersonal einsehbaren optischen Anzeigeelement verbunden ist.

Aufgabe der vorliegenden Erfindung ist es, eine Verbesserung in Bezug auf Sitzplätze von Passagierflugzeugen vorzuschlagen.

Die Aufgabe der Erfindung wird gelöst durch ein Überwachungsmodul gemäß Patentanspruch 1 für einen Sitzplatz eines Passagierflugzeuges. Der Sitzplatz weist mindestens ein Element auf. Das Element kann mindestens zwei zu überwachende Zustände einnehmen. Das Überwachungsmodul enthält mindestens einen Sensor. Jeder der Sensoren ist einem der Elemente zugeordnet, um dessen Zustand zu erfassen. Der Sensor ist für den Zustand des Elements sensitiv, kann also dessen Zustand erkennen. Im Betrieb weist der Sensor eine Zustandsinformation auf. Die Zustandsinformation entspricht dem aktuellen (d.h. im Moment der Erfassung des Zustandes) Zustand des Elements. Das Überwachungsmodul enthält eine Ausleseeinheit. Die Ausleseeinheit ist mit dem Sensor über einen Kommunikationskanal verbunden. Der Kommunikationskanal dient zur Übertragung der Zustandsinformation zwischen Sensor und Ausleseeinheit. Die Ausleseeinheit weist eine Kommunikationsschnittstelle auf. Die Kommunikationsschnittstelle dient zur Übertragung der Zustandsinformation zu einer Überwachungseinheit des Passagierflugzeuges.

Die Zustandsinformation kann im Sensor und vom Sensor aus direkt oder indirekt weitergeleitet werden, zum Beispiel in weiterverarbeiteter Form. Die Überwachungseinheit ist insbesondere ein Kabinenmanagementsystem des Passagierflugzeugs.

Die Ausleseeinheit kann dabei für mehrere Überwachungsmodule gemeinsam ausgeführt sein. Diese Module besitzen also nur eine einzige gemeinsame Ausleseeinheit bzw. teilen sich diese. Die Ausleseeinheit kann damit für mehrere Sitzplätze, z.B. in einer Reihe nebeneinander, gemeinsam ausgeführt sein. Alle Überwachungsmodule dieser Reihe (z.B. drei Sitzplätze) verfügen dann nur über eine einzige, gemeinsame Ausleseeinheit.

Gemäß der Erfindung ist der Sensor ein kapazitiver Sitzbelegungssensor. Ein oder mehrere weitere Sensoren können in einem exemplarischen Beispiel, welches nicht unter den Schutzbereich der Ansprüche fällt, auch eine Kamera sein. Der kapazitive Sitzbelegungssensor ist insbesondere ein kapazitiver Näherungssensor. Mit diesem wird eine Änderung eines elektrischen Feldes bzw. einer Kapazität messtechnisch erfasst, die durch das Einbringen eines Gegenstands oder einer Person in den Überwachungsbereich, insbesondere in den Bereich des Sitzplatzes verursacht wird. Eine Kamera kann insbesondere dazu verwendet werden, um zu kontrollieren, ob ein Sitzplatz bzw. dessen Sitzfläche belegt ist, ein Klapptisch hoch- oder heruntergeklappt ist, sich eine Sitzlehnen in aufrechter oder nach hinten geneigter Position befindet, eine Armlehne hoch- oder herunter geklappt ist, eine Fensterverdunkelung offen oder geschlossen ist oder ob sich ein Gegenstand in einem Ablagefach befindet oder dieses leer ist. Zur Zustandserkennung kann dabei insbesondere eine automatische Bildverarbeitung des Kamerabilds verwendet werden. Eine Kamera ist als Sensor kostengünstig und einfach zu handhaben.

Gemäß der Erfindung ist es möglich, in einer Überwachungseinheit, welche vom Element bzw. Sensor entfernt ist, und zentral im Passagierflugzeug (für eine Vielzahl von Sitzplätzen) zugänglich ist, die Zustände von Elementen von Sitzplätzen zu überprüfen bzw. einzusehen. Somit kann insbesondere an zentraler Stelle eine Vielzahl von Sitzplätzen auf den jeweiligen Zustand kontrolliert werden, ohne zu den jeweiligen Sitzplätzen gehen zu müssen und diese visuell inspizieren zu müssen. Außerdem steht eine Sensorinformation über den Zustand zur Verfügung, welche in der Regel fehlerunanfälliger ist als eine visuelle bzw. subjektive Erkennung des Zustandes durch Kabinenpersonal. So sind Inspektionsfehler durch optische Betrachtung weitgehend ausgeschlossen.

Ein oder mehrere weitere Sensoren in einem illustrative Beispiel, das ebenfalls nicht in den Schutzbereich der Ansprüche fällt, können sensitiv für folgende Elemente ausgebildet sein, wobei deren jeweilige mögliche Zustände in Klammern angegeben sind. Die Elemente können sein eine Sitzfläche eines Sitzes des Sitzplatzes (Sitzfläche bzw. Sitzplatz durch einen Passagier belegt oder nicht) oder ein Gurtschloss (offen, geschlossen) oder ein Klapptisch (hochgeklappt, nach unten geklappt) oder eine Sitzlehne (aufrecht gestellt oder nach hinten geneigt) oder eine Armlehne (heruntergeklappt oder hochgeklappt) oder ein Ablagefach (leer oder befüllt) oder ein Fensterverdunkelungselement (geöffnet, geschlossen).

Derartige Elemente bzw. deren Zustände können für die Sicherheit von Passagieren, (insbesondere bei Start- und Landung des Passagierflugzeugs) essentiell wichtig sein. Insbesondere sollen sich die Elemente zu bestimmten Zeiten, z.B. bei Start und Landung, in einem jeweils bestimmten Zustand befinden (z.B. Gurtschloss geschlossen, Klapptisch hochgeklappt, Sitzlehne aufrecht, Armlehne heruntergeklappt). Gemäß der Erfindung können nun diese Zustände, insbesondere zentral bzw. für mehrere Sitzplätze gemeinsam, an einer Überwachungseinheit kontrolliert bzw. von der Kabinenbesatzung überprüft werden, ohne zu den einzelnen Sitzplätzen gehen zu müssen.

Gemäß der Erfindung ist mindestens der Sensor (14a) in der Ausleseeinheit integriert. Diese Variante bietet sich insbesondere für Sensoren in Form von Kameras oder kapazitiven Sitzsensoren an, da diese dann zusammen mit der Ausleseeinheit oder von der Ausleseeinheit aus mit Energie zu deren Betrieb versorgt werden können. Außerdem ergibt sich so eine kompakte und integrierte Ausleseeinheit mit Sensorik, welche einfach und schnell im Flugzeug installierbar ist.

Gemäß der Erfindung ist die Ausleseeinheit über dem Sitzplatz anordenbar. Im bestimmungsgemäßen Installationszustand ist diese also oberhalb eines Sitzplatzes installiert. Dies kann auch schräg oberhalb erfolgen. Dies ist insbesondere günstig, wenn die Ausleseeinheit eine Kamera (wie in einem illustrativen Beispiel) oder einen kapazitiven Sitzplatzsensor trägt, da so die entsprechende Sensorik besonders vorteilhaft auf den Sitzplatz ausgerichtet ist oder ausgerichtet werden kann.

"Oberhalb" bzw. "über" bezieht sich auf den bestimmungsgemäßen Montagezustand des Überwachungsmoduls im Flugzeug und darauf, dass das Flugzeug horizontal ausgerichtet ist.

Gemäß der Erfindung ist der Kommunikationskanal ein drahtloser Kanal. Als solcher Kanal bietet sich insbesondere ein RFID-Kanal an, die Zustandsinformation kann dann im Sensor in einem RFID-fähigen Speicherelement abgelegt sein. In der Ausleseeinheit befindet sich dann eine RFID-Sende-Empfangseinheit. Der Sensor kann bezüglich der Kommunikation passiv ausgeführt sein, d.h. wird zum Auslesen extern drahtlos, z.B. aus der Ausleseeinheit bzw. deren RFID-Einheit mit Energie versorgt. Die Ausleseeinheit ist hierbei einfacher und unaufwändiger mit Bordspannung des Passagierflugzeugs zu versorgen als der Sensor. Dies gilt vor allem, wenn eine Ausleseeinheit für mehrere Sitzplätze gemeinsam zuständig ist.

In einer beispielhaften Anwendung, die nicht in den Schutzbereich der Ansprüche fällt, ist der Sensor zur Erfassung des Zustands drahtlos mit Energie versorgt. Hierzu kann beispielsweise eine drahtlose Energieeinkopplung von extern in den Sensor erfolgen, um die entsprechende Sensorik zu aktivieren, den Zustand zu erfassen und beispielsweise in einem Permanentspeicher abzulegen. Dieser Permanentspeicher kann dann zu einem späteren Zeitpunkt ausgelesen werden. Die drahtlose Energieeinkopplung muss nur so erfolgen, dass zu dem Zeitpunkt, wenn der aktuelle Zustand erfasst werden soll, genügend Energie im Sensor vorhanden ist. Eine Verkabelung des Sensors ist damit nicht notwendig.

Andere Sensoren als der kapazitive Sitzbelegungssensor können in Beispielen, welche nicht in den Schutzbereich der Ansprüche fallen, Schaltgeneratoren sein. Ein derartiger Schaltgenerator arbeitet über das Prinzip des Energy Harvesting, das heißt er gewinnt seine zum Betrieb notwendige Energie alleine durch seine mechanische Betätigung. Die mechanische Energie wird dabei in elektrische Energie umgewandelt. Insbesondere weist der Sensor einen integrierten Speicher auf, der dann über den Kommunikationskanal, insbesondere einen RFID-Kanal, auslesbar ist. Derartige Sensoren benötigen keinerlei externe Energieeinkopplung oder Zuführung, sondern arbeiten energietechnisch autark.

Erfindungsgemäss ist die Kommunikationsschnittstelle eine drahtlose Schnittstelle. Eine Datenverkabelung zwischen Ausleseeinheit und Überwachungseinheit entfällt, wodurch die Installation des Überwachungsmoduls im Passagierflugzeug besonders einfach und mit wenig Verkabelungsaufwand möglich ist. Eine derartige Schnittstelle ist beispielsweise eine WLAN-Verbindung.

In einer bevorzugten Ausführungsform enthält das Überwachungsmodul eine Zentraleinheit. Der Kommunikationskanal zwischen Sensor und Ausleseeinheit verläuft dann über die Zentraleinheit. Insbesondere ist die Zentraleinheit an einem Sitz des Sitzplatzes anordenbar, insbesondere in diesen integrierbar. Insbesondere dient sie zur Zwischenspeicherung von Zustandsinformationen von Elementen des Sitzplatzes bzw. Sitzes. Die Zentraleinheit bildet so insbesondere einen Datensammler, der die Zustandsinformationen von allen angeschlossenen Sensoren Zeitpunkt sammelt und speichert. Unabhängig von der Sammlung der Zustandsinformationen können diese dann zu einem beliebigen Zeitpunkt von der Ausleseeinheit aus der Zentraleinheit über den betreffenden Kommunikationskanal ausgelesen werden. Insbesondere kann dann als Sensor ein Schaltgenerator ohne Speicher verwendet werden, der im Moment der Betätigung die Zustandsinformation erzeugt und an die Zentraleinheit überliefert, die Zustandsinformation jedoch in der Zentraleinheit gespeichert wird. Die Zentraleinheit kann so einen zentralen Speicher im Sitzplatz für mehrere oder alle Zustandsinformationen des Sitzplatzes bilden. Somit ist es möglich, vereinfachte Sensorik am Sitzplatz in Verbindung mit der Zentraleinheit einzusetzen.

In einer bevorzugten Variante dieser Ausführungsform ist ein Abschnitt des Kommunikationskanals zwischen Sensor und Zentraleinheit unterschiedlich zu einem Abschnitt des Kommunikationskanals zwischen Zentraleinheit und Ausleseeinheit ausgeführt. Insbesondere kann so der Kommunikationskanal zwischen Sensor und Zentraleinheit drahtgebunden sein. In nicht erfindungsgemässen Beispielen sind

Sensoren, z.B. Schaltgeneratoren ohne Speicher, per Kabel an der Zentraleinheit angeschlossen. So ist die Übermittlung der Zustandsinformation vom Sensor zur Zentraleinheit besonders einfach möglich. Die Verkabelung kann insbesondere im Sitz des Sitzplatzes erfolgen. Entsprechende Sensoren für Gurtschloss, Rückenlehne und Armlehne sind in der Regel ohnehin im Sitz verbaut, sodass hier eine kompakte Einheit aus Sensor und Zentraleinheit entsteht. Der Kommunikationskanal von der Zentraleinheit zur Ausleseeinheit kann dann wieder drahtlos sein, insbesondere ein RFID-Kanal wobei die Energieversorgung für die RFID-Übertragung aus der Ausleseeinheit kommt. Die Zentraleinheit muss somit ebenfalls nicht selbst durch Energie versorgt sein, denn die Energie zum Speichern der Zustandsinformation kommt vom Sensor, die zum Auslesen von der Ausleseeinheit. Der Abschnitt des Kommunikationskanals zwischen Zentraleinheit und Ausleseeinheit kann ein von mehreren Sensoren gemeinsam genutzter Kanal sein.

In einer bevorzugten Ausführungsform enthält das Überwachungsmodul ein Anzeigeelement für mindestens eine Zustandsinformation, die im Überwachungsmodul erfasst ist. Ein derartiges Anzeigeelement kann insbesondere vom Sitzplatz aus einsehbar sein und so dem Passagier in illustrativen Beispielen, die nicht im Schutzbereich der Ansprüche liegen, Rückmeldungen über Zustände der Elemente des Sitzplatzes anzeigen. Insbesondere kann das Anzeigeelement den Status des Gurtschlosses anzeigen und den Passagier individuell auf ein notwendiges Schließen des Gurtschlosses hinweisen. Auch kann angezeigt werden, ob ein Ablagefach noch Gegenstände enthält, so dass der Passagier entsprechende im Ablagefach abgelegte Gegenstände beim Verlassen des Flugzeuges nicht vergessen kann. Der Passagier kann auch beispielsweise individuell darauf hingewiesen werden, seine Rückenlehne senkrecht zu stellen, den Klapptisch hoch zu klappen usw. Durch das individuelle Anzeigeelement werden andere Passagiere nicht belästigt, außerdem fühlt sich der Passagier in der Regel dadurch besonders effektiv persönlich angesprochen.

In einer bevorzugten Variante dieser Ausführungsform ist das Anzeigeelement von außerhalb des Überwachungsmoduls aktivierbar und deaktivierbar. So kann in illustrativen Beispielen die Anzeige beispielsweise nur in Zeitabschnitten zwischen Landeanflug und Aussteigen erfolgen, um den Passagier auf liegen gebliebene Gegenstände im Ablagefach hinzuweisen. Auch können die Hinweise für das Schließen des Gurtschlosses usw. zum Beispiel nur in Zeitabschnitten von Landung und Start angezeigt werden.

Die Aufgabe der Erfindung wird auch gelöst durch eine Überwachungseinrichtung gemäß Patentanspruch 7 für ein Passagierflugzeug. Diese enthält eine Mehrzahl von erfindungsgemäßen Überwachungsmodulen und mindestens eine Überwachungseinheit. Die Überwachungseinheit ist für mindestens zwei der Überwachungsmodule gemeinsam ausgeführt. Insbesondere ist die Überwachungseinheit für alle Überwachungsmodule der Überwachungseinrichtung gemeinsam ausgeführt. Die Überwachungseinheit bildet somit eine einzige und damit zentrale Überwachungseinheit für mehrere oder sämtliche Sitzplätze, die mit den Überwachungsmodulen ausgerüstet sind. So können an einer Stelle die Zustände der entsprechenden Elemente sämtlicher angeschlossener Sitzplätze kontrolliert werden und lediglich diejenigen Passagiere gezielt angesprochen werden, deren Elemente in entsprechende Zustände zu bringen.

Die Überwachungseinrichtung und zumindest ein Teil deren Ausführungsformen sowie die jeweiligen Vorteile wurden sinngemäß bereits im Zusammenhang mit dem erfindungsgemäßen Überwachungsmodul erläutert.

Die Aufgabe der Erfindung wird auch gelöst durch ein Passagierflugzeug gemäß Patentanspruch 8 mit mindestens einem erfindungsgemäßen Überwachungsmodul und/oder mit mindestens einer erfindungsgemäßen Überwachungseinrichtung.

Das Passagierflugzeug und zumindest ein Teil dessen Ausführungsformen sowie die jeweiligen Vorteile wurden sinngemäß bereits im Zusammenhang mit dem erfindungsgemäßen Überwachungsmodul und/oder der erfindungsgemäßen Überwachungseinrichtung erläutert.

Die Erfindung beruht auf folgenden Erkenntnissen bzw. Überlegungen: Gemäß der Erfindung ergibt sich eine insbesondere drahtlose Sitz(platz)statusüberwachung für ein Luftfahrzeug (Passagierflugzeug). Der Belegtstatus des Sitzplatzes wird über insbesondere drahtlose Sensorik und Auslesegeräte an eine Überwachungseinheit und damit insbesondere an die Kabinenbesatzung gemeldet.

Die Erfindung beruht auf der Idee, die Sicherheit von Passagieren in Passagierflugzeugen weiter zu erhöhen.

Die genannten illustrativen Beispiele, welche nicht unter den Schutzumfang der Ansprüche fallen, beruhen auch auf der Erkenntnis, dass es besonders in Flugzeugsitzen der Business- und First-Class viele Ablagen gibt, die teilweise auch etwas verdeckt oder versteckt sind. Darin kann der Passagier seine Utensilien ablegen bzw. eigene Gegenstände vergessen. Bei Ankunft werden oft Dinge vergessen oder unter Zeitdruck gesucht, da die Utensilien irgendwo abgelegt wurden. Idee der Erfindung ist es, zu detektieren, ob in den Ablagen noch etwas liegt und den Passagier darauf hinzuweisen.

Die illustrativen Beispiele beruhen auch auf der Erkenntnis, dass derzeit der Status von Flugzeugsitzen und ob der Passagier angeschnallt ist, visuell von der Kabinenbesatzung überprüft werden muss. Dies ist sehr fehlerträchtig und führt zu vielen Verletzungen im täglichen Betrieb. Zur sensorischen Erkennung von Gegenständen in den Ablagen gibt es derzeit keine Möglichkeit.

Das Konzept der Beispielen die nicht unter den Schutzbereich der Ansprüche fallen, beruht auf der Idee, insbesondere drahtlose Sensoren im oder am Gurtschloss, der Sitzrückenlehne und dem Ablagetisch über ein Auslesegerät insbesondere oberhalb des Passagiers mit Energie zu versorgen. Die Sensoren geben den jeweiligen Zustand (z.B. Gurtschloss verriegelt/offen) wieder. Die Auslesegeräte (Ausleseeinheit) pro Sitzreihe (mehrere Sitzplätze) kommunizieren per Funk mit einer Zentraleinheit (Überwachungseinheit), die die Kabinenbesatzung informiert. Die Zentraleinheit überwacht ebenfalls drahtlos die Sitzbelegung. Passagiere, die sich nicht anschnallen, können entsprechend identifiziert und gezielt angesprochen werden. Es können eine Vielzahl von verletzten Passagieren verbunden mit Ausweichlandungen, Verzögerungen und Flugabbrüchen vermieden werden. Zusätzlich wird eine Veränderung in den Ablagefächern überwacht (eine oder mehrere Kameras). Der Passagier wird zu einem geeigneten Zeitpunkt (z.B. Landeanflug) darauf hingewiesen, dass noch etwas im Ablagefach liegt. Der Hinweis erlischt automatisch bei Entnahme des Gegenstandes.

Die Erfindung kommt nur mit minimaler Änderung der Verkabelung im Flugzeug aus und lässt sich somit sehr einfach Nachrüsten. Die Erfindung erfordert gegenüber einer drahtgebundenen Sitzbelegungserkennung weniger umfangreiche Verkabelungsmaßnahmen. Die Erfindung ermöglicht eine neue Systemfunktion im Rahmen eines Kabinenmanagement-Systems, das als Überwachungseinheit mitgenutzt werden kann. In einer ersten Ausführungsform der Erfindung befindet sich pro Sitzreihe oberhalb eine Ausleseeinheit. Diese Ausleseeinheiten kommunizieren zum einen mit einem Kabinenmanagementsystem (Überwachungseinheit) und zum anderen mit drahtlosen Zustandssensoren in den Sitzen. Diese Zustandssensoren werden von der Ausleseeinheit abgefragt und hierzu drahtlos mit Energie versorgt. Weiterhin ist in der Ausleseeinheit eine Sitzbelegungsfunktion mit Hilfe eines kapazitiven Sensors integriert. Dieser Sensor stellt fest, ob der jeweilige Sitz durch eine Person belegt ist. In einem Beispiel, welches nicht unter den Schutzbereich der Ansprüche fällt, kann die Sitzbelegung über eine geeignete Kamera detektiert werden.

Die drahtlosen Zustandssensoren in den illustrativen Beispielen, welche nicht unter den Schutzbereich der Ansprüche fallen, geben Auskunft über:
- Sitzgurt offen oder geschlossen
- Klapptisch ein- oder ausgeklappt
- Sitzlehne in aufrechter Position
- Armlehnen unten
- Fensterverdunkelung offen (optional).

Diese Informationen werden den Flugbegleitern zur Verfügung gestellt. Dies ermöglicht zum einen einen sehr schnellen Überblick über den Zustand der jeweiligen Sitze insbesondere aber, ob die Anweisungen zum Anschnallen konsequent befolgt werden. Weiterhin soll insbesondere durch ein Blinken der Anschnallzeichen in der jeweiligen Sitzreihe auf den nicht geschlossenen Gurt hingewiesen werden.

Durch den drahtlosen Aufbau des Systems soll eine einfache Einrüstung in die Sitzplätze (Sitze) bzw. Gurte erfolgen.

In einer zweiten Ausführungsform der Erfindung sammelt in jedem Sitz eine Zentraleinheit den Zustand des Sitzes und meldet dies an eine Ausleseeinheit, die sich oberhalb der Sitzreihe befindet. Diese Ausleseeinheiten kommunizieren zum einen mit einem Kabinenmanagementsystem und zum anderen - in illustrativen Beispielen, die nicht unter den Schutzbereich der Ansprüche fallen - mit drahtlosen Zustandssensoren in den Sitzen. Diese Zustandssensoren werden von der Ausleseeinheit abgefragt und hierzu drahtlos mit Energie versorgt. Weiterhin ist in der Ausleseeinheit eine Sitzbelegungsfunktion mit Hilfe eines kapazitiven Sensors integriert. Dieser Sensor stellt fest, ob der jeweilige Sitz durch eine Person belegt ist. Alternativ kann in illustrativen Beispielen, die nicht unter den Schutzbereich der Ansprüche fallen, die Sitzbelegung über eine geeignete Kamera detektiert werden.

In einem illustrativen Beispiel, das nicht unter den Schutzbereich der Ansprüche fällt, befindet sich pro Sitzreihe oberhalb eine Ausleseeinheit. Diese Ausleseeinheiten kommunizieren zum einen mit einem Kabinenmanagementsystem und zum anderen mit einem drahtlosen Zustandssensor in dem Gurtschloss. Dieser Zustandssensor wird von der Ausleseeinheit abgefragt und hierzu drahtlos mit Energie versorgt.

Die in der Ausleseeinheit integrierte Kamera erkennt folgende Zustände:
- Sitz belegt,
- Klapptisch ein- oder ausgeklappt,
- Sitzlehne in aufrechter Position,
- Armlehnen unten,
- Fensterverdunkelung offen,
- Zustandsänderung in den Ablagefächern.

Um eine sichere Erkennung des Sitzbelegstatus auch unter geringen Lichtverhältnissen zu ermöglichen, ist die Kamera insbesondere auch im nahen Infrarotbereich empfindlich und/oder mit entsprechenden Beleuchtungsmitteln ausgestattet.

Als Zusatzfunktion können Zustandsänderungen in den Sitztaschen/-ablagefächern überwacht werden. Es wird der Änderungsstatus in Sitztaschen-/ablagefächern detektiert und dem Passagier im Landeanflug ein Hinweis gegeben, dass sich möglicherweise noch persönliche Gegenstände im Sitz (Sitzplatz) befinden.

In illustrativen Beispielen, die nicht unter den Schutzbereich der Ansprüche fallen, ergibt sich auch eine Anzeige von liegen gebliebenen Gegenständen. Gemäß der Erfindung werden Gegenstände vom System detektiert, wenn diese in Taschen, Ablagen zum Beispiel eines Flugzeugssitzes abgelegt werden. Vor Verlassen des Flugzeuges wird dem Nutzer angezeigt, dass in diesen Taschen noch Gegenstände sind, die er mitnehmen sollte.

Die genannten illustrativen Beispiele beruhen auf der Idee, zu detektieren, wenn in eine Ablage etwas eingelegt wird. Insbesondere bei Einschalten eines Triggers, zum Beispiel dem Signal für Landeanflug, wird per Anzeige, Licht etc. darauf hingewiesen, dass in dieser Ablage noch etwas liegt. Sobald das Teil aus der Ablage entnommen wurde, wird die Anzeige wieder zurückgesetzt.

Gemäß der Erfindung ergibt sich so mehr Komfort für den Nutzer.

Insbesondere werden in illustrativen Beispielen, die nicht unter den Schutzbereich der Ansprüche fallen, eine oder mehrere Kameras angebracht, die den Bereich der Ablage erfassen. Als Referenz dient die leere Ablage. Sobald sich die Referenz verändert, ist etwas hineingelegt worden. Durch dieses Delta kann relativ einfache Kameratechnologie verwendet werden.

Weitere illustrative Beispiele, die nicht unter den Schutzbereich der Ansprüche fallen, ergeben sich aus der nachfolgenden Beschreibung sowie der beigefügten Figuren. Dabei zeigen in einer schematischen Prinzipskizze:
- Figur 1: einen Ausschnitt aus einem Passagierflugzeug mit Überwachungseinrichtung bzw. Überwachungsmodul, welches neben den Merkmalen der Erfindung noch weitere Merkmale enthält, die nicht unter den Schutzbereich der Ansprüche fällt.
- Figur 2: ein nicht erfindungsgemässes Beispiel für ein Überwachungsmodul.

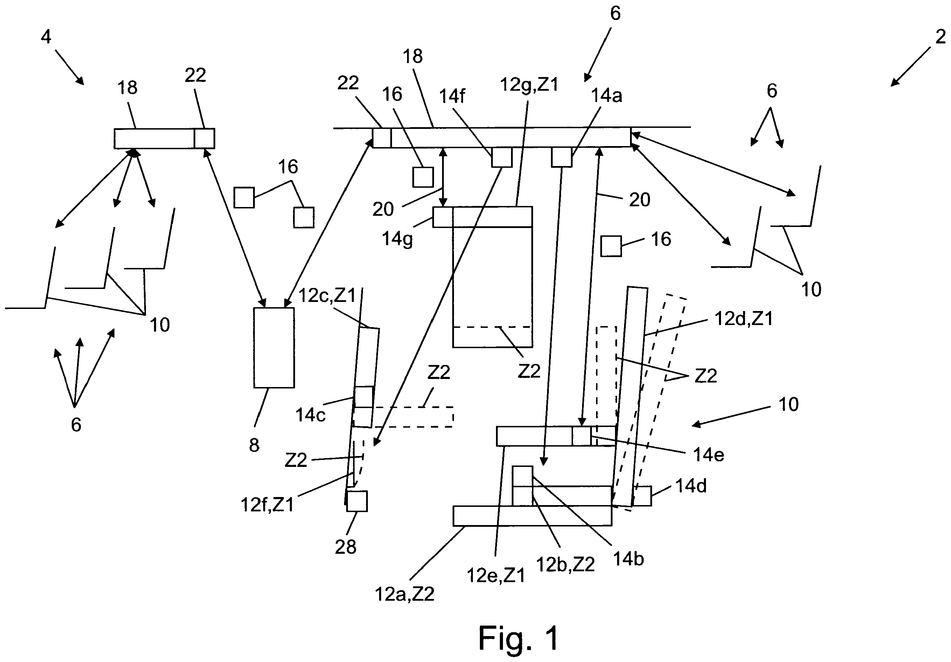

Figur 1 zeigt einen Ausschnitt aus einem Passagierflugzeug 2, das eine Überwachungseinrichtung 4 enthält. Die Überwachungseinrichtung 4 enthält eine Mehrzahl von Überwachungsmodulen 6, von denen lediglich eines detaillierter dargestellt ist. Die Überwachungseinrichtung 4 enthält eine Überwachungseinheit 8, die hier zentral für alle Überwachungsmodule 6 gemeinsam ausgeführt ist.

Das Passagierflugzeug 2 enthält eine Vielzahl von Sitzplätzen 10, von denen lediglich einer detaillierter dargestellt ist. Der Sitzplatz weist Elemente 12a bis g auf. Jedes der Elemente 12a bis g kann jeweils zwei Zustände Z1, 2 einnehmen, diese sind in Klammern nach den Elementen wie folgt angegeben: Die Elemente sind 12a eine Sitzfläche (Z1 belegt, das heißt ein Passagier hat auf diesem Sitzplatz Platz genommen, Z2 unbelegt), 12b ein Gurtschloss (Z1 verriegelt, Z2 unverriegelt (nicht dargestellt)) - ein zugehöriger Sicherheitsgurt ist in Fig. 1 nur angedeutet, 12c ein Klapptisch (Z1 hochgeklappt, Z2 (gestrichelt dargestellt) heruntergeklappt), 12d eine Sitzlehne (Z1 aufrecht gestellt, Z2 nach hinten geneigt (gestrichelt dargestellt)), 12e eine Armlehne (Z1 heruntergeklappt, Z2 hochgeklappt (gestrichelt dargestellt)), 12f ein Ablagefach (Z1 leer, Z2 befüllt (gestrichelt dargestellt)), 12g ein Fensterverdunkelungselement (Z1 hochgeschoben, Z2 nach unten gezogen (gestrichelt dargestellt)).

Jedem der Elemente 12a bis g ist ein Sensor 14a bis g zugeordnet. Die Sensoren 14a bis g erfassen die jeweiligen Zustände Z1, 2 und geben jeweils eine im Moment der Erfassung aktuelle Zustandsinformation 16 (in den Figuren symbolisch angedeutet) die dem aktuellen Zustand Z1, Z2 entspricht, aus bzw. weisen diese auf oder beinhalten diese. Der Sensor 14a ist ein kapazitiver Sitzbelegungssensor, die beispielhaft ergänzten Sensoren 14b bis e und 14g sind Schaltgeneratoren. Der Sensor 14f ist eine Videokamera.

Das Überwachungsmodul 6 enthält eine Ausleseeinheit 18, die über je einen Kommunikationskanal 20 (der Übersichtlichkeit halber sind nicht alle eingezeichnet) mit je einem der Sensoren 14a bis g verbunden ist. Die Kommunikationskanäle 20 dienen zur Übertragung der Zustandsinformation 16 von den Sensoren 14a bis g zur Ausleseeinheit 18.

Das Überwachungsmodul 6 weist außerdem eine Kommunikationsschnittstelle 22 auf. Diese dient zur Übertragung der Zustandsinformationen 16 von der Ausleseeinheit 18 zur Überwachungseinheit 8.

Die Sensoren 14a und 14f sind in die Ausleseeinheit 18 integriert. Die Sensoren 14b bis e und 14g sind drahtlos mit Energie versorgt. Es handelt sich hierbei um Schaltgeneratoren, die ihre zum Betrieb benötigte Energie aus deren Betätigung selbst erzeugen. Die entsprechenden Sensoren 14 arbeiten also nach dem Prinzip des Energy-Harvesting. Im Betrieb erzeugen die betreffenden Sensoren 14 genügend Energie, um die Zustandsinformation 16 in einem sensorinternen Permanentspeicherelement abzulegen. Aus diesem Speicherelement wird die Zustandsinformation 16 bei Bedarf bzw. auf Anfrage per RFID über den Kommunikationskanal 20 ausgelesen. Hierzu wird im jeweiligen Sensor 14 ein geringer Energieeintrag drahtlos von der Ausleseeinheit 18 erzeugt, der als Sendeenergie ausreicht, um die Zustandsinformation 16 aus dem Sensorspeicher auszulesen und per Funk zur Ausleseeinheit 18 zu übertragen.

Die Übertragung von der Ausleseeinheit 18 zur Überwachungseinheit 8 erfolgt über die Kommunikationsschnittstelle 22 in Form einer Drahtlosschnittstelle, hier per WLAN bzw. WIFI.

Die Ausleseeinheit 18 dient auch als Ausleseeinheit 18 für weitere Überwachungsmodule 6 von weiteren Sitzplätzen 10, was hier nur symbolisch angedeutet ist. Die insgesamt drei Sitzplätze 10 mit gemeinsamer Ausleseeinheit 18 bilden eine zusammenhängende Dreier-Sitzreihe im Passagierflugzeug 2.

Die Ausleseeinheit 18 ist über den betreffenden Sitzplätzen 10, welchen sie zugeordnet ist, angeordnet. Der Kommunikationskanal 20 ist ein drahtloser Kommunikationskanal, hier ein RFID-Kanal.

Symbolisch ist eine weitere Ausleseeinheit 18 angedeutet, welche zum Austausch der entsprechenden Zustandsinformationen 16 mit der gleichen Überwachungseinheit 8 dient. Die weitere Ausleseeinheit 18 ist wiederum für drei Sitzplätze 10 (Dreier-Sitzreihe) mit insgesamt drei Überwachungsmodulen 6 als gemeinsame Ausleseeinheit 18 zuständig.

Die Überwachungseinheit 8 ist ein Kabinenmanagementsystem des Passagierflugzeugs 2. Dort werden die Zustandsinformationen 16 sämtlicher Sitzplätze 10 des Passagierflugzeuges 2 zusammengefasst und auf einer nicht näher erläuterten oder dargestellten Anzeige wiedergegeben und können vom Flugpersonal eingesehen werden. Die Zustandsinformationen 16 sind dabei weiterverarbeitet, z.B. in Form von farbigen Punkten für je einen der Sitzplätze. So sind zentral am Ort der Überwachungseinheit 8 sämtliche Zustände Z1, Z2 aller Elemente 12 aller Sitzplätze 10 einsehbar.

Ein Anzeigeelement 28, das die Zustandsinformation Z1, 2 des Elements 12f anzeigt ist ebenfalls Teil des Überwachungsmoduls 8. Das Anzeigeelement 28 ist vom Sitzplatz 10 aus einsehbar. So wird ein den Sitzplatz 10 benutzender Passagier darauf hingewiesen, dass im Zustand Z2 noch Gegenstände im Element 12f (Ablagefach) vorhanden sind. So kann der Passagier nicht vergessen, diese beim Verlassen des Passagierflugzeugs 2 mitzunehmen. Das Anzeigeelement 28 ist von außerhalb des Überwachungsmoduls 6, hier von der Überwachungseinheit 8 in Form des Kabinenmanagementsystems aus, aktivierbar, sodass es den Zustand Z1 oder Z2 anzeigt oder deaktivierbar, so dass es nichts anzeigt. Zu Beginn des Fluges ist es beispielsweise deaktiviert, um den Passagier nicht mit unnötigen Hinweisen zu stören. Kurz vor Verlassen des Passagierflugzeuges 2, zum Beispiel ab dem Landeanflug, wird der Passagier dagegen durch das aktivierte Anzeigeelement 28 auf das etwaige Vorhandensein von Gegenständen im Ablagefach hingewiesen.

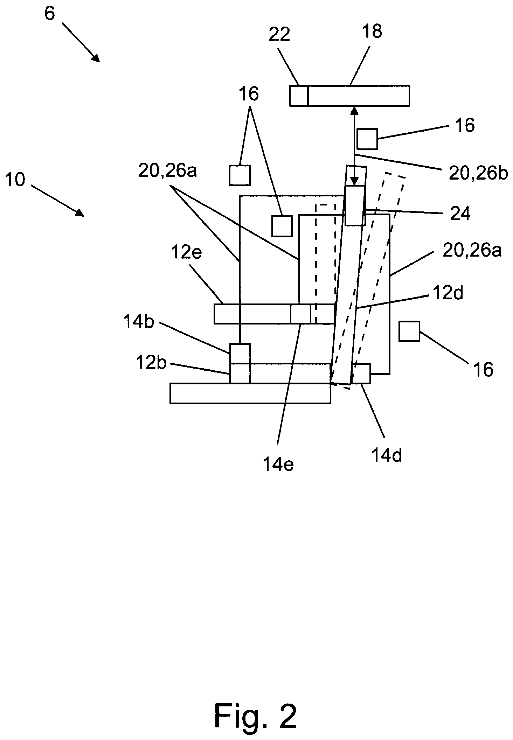

Figur 2 zeigt einen Ausschnitt aus einem alternativen Überwachungsmodul 6. Dieses enthält eine Zentraleinheit 24. Die Kommunikationskanäle 20 der im Sitz des Sitzplatzes 10 angeordneten Sensoren 14b,d,e verlaufen hier über die Zentraleinheit 24. Ein Abschnitt 26a des jeweiligen Kommunikationskanals 20 zwischen Sensor 14 und Zentraleinheit 24 ist hier drahtgebunden ausgeführt und weicht damit von der Ausführung des zweiten Abschnitts 26b zwischen Zentraleinheit 24 und Ausleseeinheit 18 ab, der wieder drahtlos als RFID-Kanal ausgebildet ist. Auch hier sind die Sensoren 14b, d, e Schaltgeneratoren, die jedoch kein internes Permanentspeicherelement enthalten. Ein solches ist zentral für die drei Sensoren 14 b, d, e in der Zentraleinheit 24 enthalten. Im Betrieb bzw. bei Betätigung erzeugen die Schaltgeneratoren wieder genügend Energie, um die Zustandsinformation 16 zu erfassen und an die Zentraleinheit 24 zu übertragen und dort permanent abzuspeichern. Aus der Zentraleinheit 24 bzw. deren Speicher wird die Zustandsinformation 16 aller drei Sensoren 14b, d, e per RFID gemeinsam ausgelesen.

### Bezugszeichenliste

- 2: Passagierflugzeug
- 4: Überwachungseinrichtung
- 6: Überwachungsmodul
- 8: Überwachungseinheit
- 10: Sitzplatz
- 12a-g: Element
- 14a-g: Sensor
- 16: Zustandsinformation
- 18: Ausleseeinheit
- 20: Kommunikationskanal
- 22: Kommunikationsschnittstelle
- 24: Zentraleinheit
- 26a,b: Abschnitt
- 28: Anzeigeelement

- Z1,2: Zustand

## Patentansprüche

1. Überwachungsmodul (6) für einen Sitzplatz (10) eines Passagierflugzeuges (2), wobei der Sitzplatz (10) mindestens ein Element (12a-g) aufweist, das mindestens zwei zu überwachende Zustände (Z1,2) einnehmen kann,
- mit mindestens einem Sensor (14a), der einem der Elemente (12a-g) zugeordnet ist und für dessen Zustand (Z1,2) sensitiv ist und der im Betrieb eine dem aktuellen Zustand (Z1,2) entsprechende Zustandsinformation (16) aufweist,
- mit einer Ausleseeinheit (18), die über einen Kommunikationskanal (20) zur Übertragung der Zustandsinformation (16) mit dem Sensor (14a) verbunden ist und die eine Kommunikationsschnittstelle (22) zur Übertragung der Zustandsinformation (16) zu einer Überwachungseinheit (8) des Passagierflugzeugs (2) aufweist, wobei die Überwachungseinheit (8) zentral im Passagierflugzeug zugänglich ist, und einer Vielzahl von Sitzplätzen zugeordnet ist, wobei der Kommunikationskanal (20) ein drahtloser Kanal ist,
**dadurch gekennzeichnet, dass**
- der Sensor (14a) ein kapazitiver Sitzbelegungssensor ist,
- die Ausleseeinheit (18) über dem Sitzplatz (10) anordenbar ist,
- der Sensor (14a) in der Ausleseeinheit (18) integriert ist.

2. Überwachungsmodul (6) nach Anspruch 1,
**dadurch gekennzeichnet, dass**
die Kommunikationsschnittstelle (22) eine drahtlose Schnittstelle ist.

3. Überwachungsmodul (6) nach einem der vorhergehenden Ansprüche, **dadurch gekennzeichnet, dass**
das Überwachungsmodul (6) eine Zentraleinheit (24) enthält, und der Kommunikationskanal (20) zwischen Sensor (14a) und Ausleseeinheit (18) über die Zentraleinheit (24) verläuft.

4. Überwachungsmodul (6) nach Anspruch 3, **dadurch gekennzeichnet, dass** ein Abschnitt des Kommunikationskanals (20) zwischen Sensor (14a) und Zentraleinheit (24) unterschiedlich zu einem Abschnitt des Kommunikationskanals (20) zwischen Zentraleinheit (24) und Ausleseeinheit (18) ausgeführt ist.

5. Überwachungsmodul (6) nach einem der vorhergehenden Ansprüche, **dadurch gekennzeichnet, dass** das Überwachungsmodul (6) ein Anzeigeelement (28) für mindestens eine im Überwachungsmodul (6) erfasste Zustandsinformation (16) enthält.

6. Überwachungsmodul (6) nach Anspruch 5, **dadurch gekennzeichnet, dass** das Anzeigeelement (28) von außerhalb des Überwachungsmoduls (8) aktivierbar und deaktivierbar ist.

7. Überwachungseinrichtung (4) für ein Passagierflugzeug (2), mit einer Mehrzahl von Überwachungsmodulen (6) nach einem der Ansprüche 1 bis 6, und mit mindestens einer Überwachungseinheit (8), die für mindestens zwei der Überwachungsmodule (6) gemeinsam ausgeführt ist.

8. Passagierflugzeug (2) mit mindestens einem Überwachungsmodul (6) nach einem der Ansprüche 1 bis 6 und/oder mit mindestens einer Überwachungseinrichtung (4) nach Anspruch 7.

9. Passagierflugzeug (2) nach Anspruch 8, **dadurch gekennzeichnet, dass** in einem bestimmungsgemäßen Installationszustand die Ausleseeinheit (18) oberhalb eines Sitzplatzes (10) installiert ist.

## Claims

1. Monitoring module (6) for a seat (10) of a passenger aircraft (2), the seat (10) having at least one element (12a-g) that is able to adopt at least two states (Z1,2) to be monitored,
- having at least one sensor (14a), which is associated with one of the elements (12a-g) and is sensitive to the state (Z1,2) thereof and which, during operation, has state information (16) corresponding to the present state (Z1,2),
- having a reading unit (18), which is connected to the sensor (14a) via a communication channel (20) for the purpose of transmitting the state information (16) and which has a communication interface (22) for transmitting the state information (16) to a monitoring unit (8) of the passenger aircraft (2), the monitoring unit (8) being accessible centrally in the passenger aircraft and being associated with a multiplicity of seats, the communication channel (20) being a wireless channel,
**characterized in that**
- the sensor (14a) is a capacitive seat occupancy sensor,
- the reading unit (18) can be arranged over the seat (10),
- the sensor (14a) is integrated in the reading unit (18) .

2. Monitoring module (6) according to Claim 1, **characterized in that**
the communication interface (22) is a wireless interface.

3. Monitoring module (6) according to either of the preceding claims,
**characterized in that**
the monitoring module (6) contains a central processing unit (24), and the communication channel (20) runs between the sensor (14a) and the reading unit (18) via the central processing unit (24).

4. Monitoring module (6) according to Claim 3, **characterized in that**
a portion of the communication channel (20) between the sensor (14a) and the central processing unit (24) is designed differently from a portion of the communication channel (20) between the central processing unit (24) and the reading unit (18).

5. Monitoring module (6) according to one of the preceding claims,
**characterized in that**
the monitoring module (6) contains a display element (28) for at least one piece of state information (16) logged in the monitoring module (6).

6. Monitoring module (6) according to Claim 5, **characterized in that**
the display element (28) is activable and deactivable from outside the monitoring module (8).

7. Monitoring device (4) for a passenger aircraft (2), having a plurality of monitoring modules (6) according to one of Claims 1 to 6, and having at least one monitoring unit (8), which is designed for at least two of the monitoring modules (6) jointly.

8. Passenger aircraft (2) having at least one monitoring module (6) according to one of Claims 1 to 6 and/or having at least one monitoring device (4) according to Claim 7.

9. Passenger aircraft (2) according to Claim 8, **characterized in that**
the reading unit (18) is installed above a seat (10) in an intended installation state.

## Revendications

1. Module de surveillance (6) pour une place assise (10) d'un aéronef de transport de passagers (2), la place assise (10) possédant au moins un élément (12a-g) qui peut adopter au moins deux états (Z1,2) surveillés,
- comprenant au moins un capteur (14a), auquel est associé l'un des éléments (12a-g) et qui est sensible à son état (Z1, 2) et qui, en fonctionnement, présente une information d'état (16) correspondant à l'état (Z1, 2) actuel,
- comprenant une unité de lecture (18), qui et reliée au capteur (14a) par le biais d'un canal de communication (20) en vue de la transmission de l'information d'état (16) et qui possède une interface de communication (22) servant à la transmission de l'information d'état (16) à une unité de surveillance (8) de l'aéronef de transport de passagers (2), l'unité de surveillance (8) étant accessible de manière centrale dans l'aéronef de transport de passagers et étant associée à une pluralité de places assises, le canal de communication (20) étant un canal sans fil,
**caractérisé en ce que**
- le capteur (14a) est un capteur d'occupation de siège capacitif,
- l'unité de lecture (18) peut être disposée au-dessus de la place assise (10),
- le capteur (14a) est intégré dans l'unité de lecture (18) .

2. Module de surveillance (6) selon la revendication 1, **caractérisé en ce que**
l'interface de communication (22) est une interface sans fil.

3. Module de surveillance (6) selon l'une des revendications précédentes,
**caractérisé en ce que**
le module de surveillance (6) contient une unité centrale (24) et le canal de communication (20) entre le capteur (14a) et l'unité de lecture (18) passe par l'unité centrale (24).

4. Module de surveillance (6) selon la revendication 3, **caractérisé en ce que**
une portion du canal de communication (20) entre le capteur (14a) et l'unité centrale (24) est réalisée différemment d'une portion du canal de communication (20) entre l'unité centrale (24) et l'unité de lecture (18).

5. Module de surveillance (6) selon l'une des revendications précédentes,
**caractérisé en ce que**
le module de surveillance (6) contient un élément indicateur (28) pour au moins une information d'état (16) collectée dans le module de surveillance (6).

6. Module de surveillance (6) selon la revendication 5, **caractérisé en ce que**
l'élément indicateur (28) peut être activé et désactivé depuis l'extérieur du module de surveillance (8).

7. Dispositif de surveillance (4) pour un aéronef de transport de passagers (2), comprenant une pluralité de modules de surveillance (6) selon l'une des revendications 1 à 6 et comprenant au moins une unité de surveillance (8), laquelle est réalisée en commun pour au moins deux modules de surveillance (6).

8. Aéronef de transport de passagers (2), comprenant au moins un module de surveillance (6) selon l'une des revendications 1 à 6 et/ou comprenant au moins un dispositif de surveillance (4) selon la revendication 7.

9. Aéronef de transport de passagers (2) selon la revendication 8,
**caractérisé en ce que**
dans un état d'installation conforme à sa destination, l'unité de lecture (18) est installée au-dessus d'une place assise (10).
